# EUROPÄISCHE PATENTSCHRIFT

(11) **EP 0 477 741 B1**
(45) Veröffentlichungstag und Bekanntmachung des Hinweises auf die Patenterteilung: **07.07.1993**
(21) Anmeldenummer: 91115792.3
(22) Anmeldetag: 18.09.1991
(51) Int. Cl.: B60P 3/36

(54) **Einbaumöbel für Reisemobile**
Built-in furniture for mobile homes
Meuble incorporé pour caravanes

(30) Priorität: 28.09.1990 DE 9013614 U
(43) Veröffentlichungstag der Anmeldung: 01.04.1992
(73) Patentinhaber: REIMO REISEMOBIL-CENTER GmbH, D-63329 Egelsbach (DE)
(72) Erfinder: Manowski, Kurt, W-6073 Egelsbach (DE)
(74) Vertreter: Katscher, Helmut, Dipl.-Ing.

(56) Entgegenhaltungen:
- DE-U- 8 416 285

## Beschreibung

Die Erfindung betrifft ein Einbaumöbel für Reisemobile mit einer Frontwand, die feste Frontwandabschnitte und Türen aufweist, und mit Trennwänden und Seitenwänden, die sich von der Frontwand nach hinten erstrecken.

Herkömmliche Einbaumöbel für Reisemobile weisen eine Frontwand auf, die aus einer Wandplatte mit Ausschnitten für die Türöffnungen oder sonstige Gefachöffnungen versehen ist. Die Türen sind vor den Türöffnungen angeordnet. Derartige Einbanwöbel sind beispielsweise aus dem DE-U-84 16 285 bekannt.

Bei diesen bekannten Einbaumöbeln sind nachträgliche Änderungen bzw. eine Anpassung an unterschiedliche Aufteilungen nicht oder nur mit großem Aufwand möglich. Wenn zusätzliche Türen vorgesehen werden sollen, müssen die Türöffnungen aus der Frontwandplatte ausgeschnitten werden, was mit erheblichem Arbeitsaufwand verbunden ist.

Aufgabe der Erfindung ist es, ein Einbaumöbel für Reisemobile der eingangs genannten Gattung zu schaffen, das einen nachträglichen Umbau in einfacher Weise ermöglicht und das unter Verwendung von vorgefertigten Bauelementen in Baukastenweise erstellt werden kann und somit eine einfache Anpassung an unterschiedliche Bedarfsfälle ermöglicht.

Diese Aufgabe ist durch die Merkmale des Anspruchs 1 gelöst. Hierbei weist die Frontwand mehrere im Abstand zueinander angeordnete Pfosten auf, zwischen denen die Türen und die festen Trennwandabschnitte angeordnet sind, daß jeder Pfosten aus einem Pfostenprofil mit einem nach vorn freiliegenden Mittelsteg besteht, von dem an mindestens einer Seite ein Anschlagschenkel vorspringt, an dem die benachbarte Tür oder der feste Trennwandabschnitt anliegt, und daß an der Rückseite des Pfostenprofils zwei parallele Rippen vorspringen, zwischen denen die Vorderkante einer Trennwand oder Seitenwand aufgenommen ist.

Die Pfosten, die ggf. durch Querriegel verbunden sein können, bilden ein Gitterwerk, in das nach Belieben die Türen oder feste Trennwandabschnitte eingesetzt werden können. Zugleich verbinden die Pfosten die so aufgebaute Frontwand mit den einzelnen, nach hinten verlaufenden Trennwänden oder Seitenwänden des Einbaumöbels.

Der seitliche Anschlagschenkel bildet zusammen mit dem anschließenden Mittelsteg einen Falz, der die Tür oder einen festen Trennwandabschnitt aufnimmt. Dadurch wird auch bei den auftretenden Herstellungstoleranzen ein weitgehend dichter Verschluß der Frontwand erreicht. Da die Vorderkanten der Trennwände oder der Seitenwände von den vom Pfostenprofil vorspringenden Rippen vollständig umschlossen werden, entfällt die Notwendigkeit, diese Kanten mit Kantenumleimern oder in anderer Weise zu verschließen.

Die beschriebenen Pfostenprofile können auch für den oberen und unteren Abschluß der Frontwand und für Querriegel verwendet werden, die benachbarte Pfosten verbinden.

Gemäß einer bevorzugten Ausführungsform der Erfindung ist vorgesehen, daß der Anschlagschenkel an seiner der Tür oder dem festen Frontwandabschnitt zugekehrten Anschlagfläche einen elastischen Wulst aufweist, der als Dichtungswulst wirkt und bei den Türen zugleich einen elastischen Anschlag bildet.

Vorzugsweise ist das Pfostenprofil ein aus Kunststoff extrudiertes Kammerprofil, an das der elastische Wulst aus weicherem Kunststoff angeformt ist.

Die Erfindung ermöglicht es, Bausätze zu schaffen, die aus den Pfostenprofilen, den Trennwänden und Seitenwänden, standardisierten Türen und standardisierten bzw. leicht anzupassenden Frontwandabschnitten bestehen. Aus diesen Bausätzen können - unter Verwendung einfacher Gefachböden und herkömmlicher Arbeitsplatten - in einfacher Weise Einbaumöbel in sehr unterschiedlichen Abmessungen und Aufteilungen für Reisemobile und ähnliche Campingfahrzeuge gebaut werden.

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist. Es zeigt:
Fig. 1 eine vereinfachte Vorderansicht eines Einbaumöbels für Reisemobile und
Fig. 2 einen vergrößerten Teilschnitt längs der Linie II-II in Fig. 1.

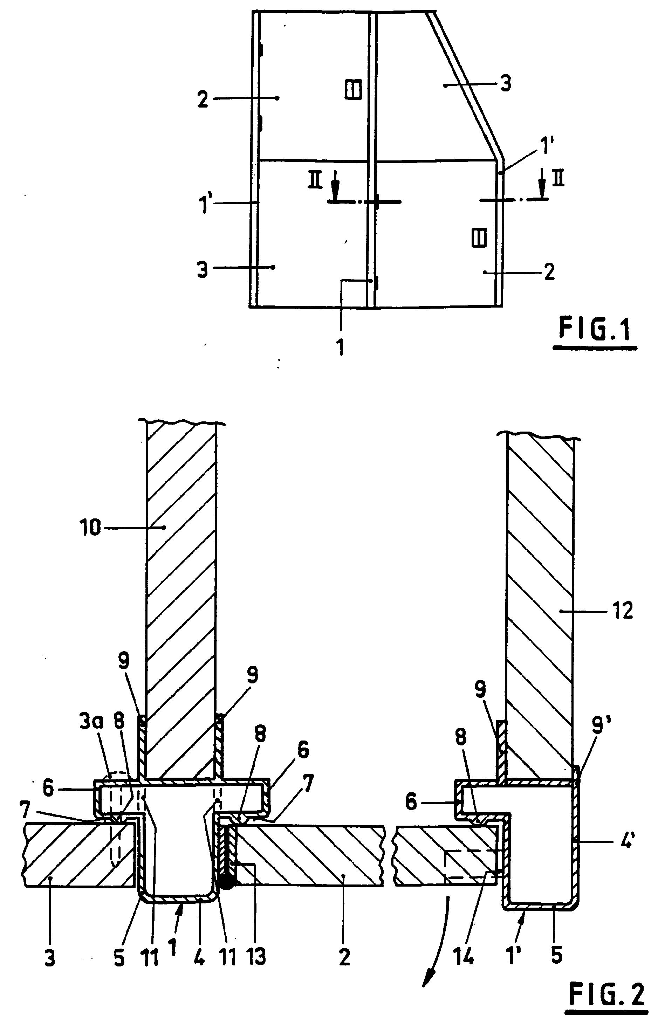

Das in Fig. 1 dargestellte Einbaumöbel, beispielsweise ein Einbauschrank, weist in seiner in Fig.1 sichtbaren Frontwand mehrere im Abstand zueinander angeordnete Pfosten 1, 1' auf, zwischen denen Türen 2 und feste Frontwandabschnitte 3 angeordnet sind.

Wie man aus der Schnittdarstellung in Fig. 2 erkennt, bestehen die Pfosten 1 bzw. 1' jeweils aus einem Pfostenprofil 4 bzw. 4', das ein aus Kunststoff extrudiertes Kammerprofil ist. Jedes Pfostenprofil 4 bzw. 4' weist einen nach vorn freiliegenden, über die Frontseite der benachbarten Türen 2 bzw. festen Frontwandabschnitte 3 vorstehenden Mittelsteg 5 auf.

Bei dem einen in Fig. 2 gezeigten Pfostenprofil 4, das einen Mittelpfosten zwischen Türen 2 und festen Frontwandabschnitten 3 bildet, springt auf beiden Seiten des Mittelstegs 5 jeweils ein Anschlagwinkel 6 vor, an dem die benachbarte Tür 2 anliegt bzw. der feste Frontwandabschnitt 3 mit Schrauben 3a von hinten angeschraubt ist. Der Anschlagwinkel 6 weist an seiner der Tür 2 bzw. dem festen Frontwandabschnitt 3 zugekehrten Anschlagfläche 7 einen an das Pfostenprofil 4 angeformten elastischen Wulst 8 aus weicherem Kunststoff auf.

Beim Pfostenprofil 4', das einen Seitenpfosten bildet, springt nur nach der einen Seite ein Anschlagschenkel 6 vor, an dessen elastischem Wulst 8 die Tür 2 anliegt.

An der Rückseite der Pfostenprofile 4 bzw. 4' springen zwei parallele Rippen 9 nach hinten vor, zwischen denen die Vorderkante einer Trennwand 10 aufgenommen ist. Bei dem Pfostenprofil 4 für einen Mittelpfosten sind die beiden vorspringenden Rippen 9 gleich groß und symmetrisch angeordnet, so daß der Querschnittsaufbau des Pfostenprofils 4 insgesamt symmetrisch ist. Wie in Fig. 2 mit gestrichelten Linien angedeutet ist, kann der Innenraum des Pfostenprofils 4 durch Innenwände 11 unterteilt sein, wenn dies aus Gründen der Festigkeit oder der Herstellung erwünscht ist.

Bei dem einen Seitenpfosten 1' bildenden Pfostenprofil 4' ist die dem Anschlagschenkel 6 benachbarte Rippe 9 ebenso groß ausgeführt wie beim Pfostenprofil 4. Die zweite, an der Außenseite liegende Rippe 9' ist hiebei jedoch kürzer ausgeführt; sie dient dazu, die vordere Schnittkante der zwischen die Rippen 9 und 9' eingesetzten Seitenwand 12 zu verdecken.

Wie in Fig.2 gezeigt, ist die Tür 2 mit einem Scharnier 13 an der Seitenfläche des Mittelstegs 5 des Pfostenprofils 4 angebracht. An der gegenüberliegenden Seite ist ein Verschluß 14 vorgesehen.

## Patentansprüche

1. Einbaumöbel für Reisemobile mit einer Frontwand, die feste Frontwandabschnitte (3) und Türen (2) aufweist, und mit Trennwänden (10) und Seitenwänden (12), die sich von der Frontwand nach hinten erstrecken, dadurch gekennzeichnet, daß die Frontwand mehrere im Abstand zueinander angeordnete Pfosten (1, 1') aufweist, zwischen denen die Türen (2) und die festen Trennwandbschnitte (3) angeordnet sind, daß jeder Pfosten (1, 1') aus einem Pfostenprofil (4, 4') mit einem nach vorn freiliegenden Mittelsteg (5) besteht, von dem an mindestens einer Seite ein Anschlagschenkel (6) vorspringt, an dem die benachbarte Tür (2) oder der feste Frontwandabschnitt (3) anliegt, und daß an der Rückseite des Pfostenprofils (4, 4') zwei parallele Rippen (9, 9') vorspringen, zwischen denen die Vorderkante einer Trennwand (10) oder Seitenwand (12) aufgenommen ist.

2. Einbaumöbel nach Anspruch 1, dadurch gekennzeichnet, daß der Anschlagschenkel (6) an seiner der Tür (2) oder dem festen Frontwandabschnitt (3) zugekehrten Anschlagfläche (7) einen elastischen Wulst (8) aufweist.

3. Einbaumöbel nach Anspruch 2, dadurch gekennzeichnet, daß das Pfostenprofil (4, 4') ein aus Kunststoff extrudiertes Kammerprofil ist, an das der elastische Wulst (8) aus weicherem Kunststoff angeformt ist.

4. Einbaumöbel nach Anspruch 1, dadurch gekennzeichnet, daß das Pfostenprofil (4) in der Weise symmetrisch ausgeführt ist, daß auf beiden Seiten des Mittelstegs (5) jeweils gleich große Anschlagschenkel (6) vorspringen und daß die beiden an der Rückseite angeordneten Rippen (9) zur Aufnahme einer Trennwand (10) gleich groß sind.

5. Einbaumöbel nach Anspruch 1, dadurch gekennzeichnet, daß das Pfostenprofil (4') für einen Seitenpfosten (1') nur an einer Seite einen Anschlagschenkel (6) aufweist, und daß die auf der anderen Seite angeordnete Rippe (9') kleiner ist als die dem Anschlagschenkel (6) benachbarte Rippe (9).

6. Einbaumöbel nach Anspruch 1, dadurch gekennzeichnet, daß der Mittelsteg (5) über die Frontseite der benachbarten Türen (2) bzw. festen Frontwandabschnitte (3) vorsteht.

## Claims

1. Built-in furniture for mobile homes with a front wall, which comprises fixed front wall sections (3) and doors (2), and with dividing walls (10) and side walls (12), which extend rearwards from the front wall, characterised in that the front wall comprises a plurality of posts (1, 1') arranged at a distance apart, between which the doors (2) and the fixed dividing wall sections (3) are located, that each post (1, 1') consists of a post profile (4, 4') with a central web (5) exposed in a forwards direction, from which, on at least one side, an abutment leg (6) projects, against which the adjacent door (2) or the fixed front wall section (3) bears, and that projecting on the rear side of the post profile (4, 4') are two parallel ribs (9, 9'), between which the front edge of a dividing wall (10) or side wall (12) is received.

2. Built-in furniture according to Claim 1, characterised in that on its abutment surface (7) facing the door (2) or the fixed front wall section (3), the abutment leg (6) comprises a resilient bead (8).

3. Built-in furniture according to Claim 2, characterised in that the post profile (4, 4') is a chambered profile extruded from synthetic material, on which the resilient bead (8) of softer synthetic material is integrally formed.

4. Built-in furniture according to Claim 1, characterised in that the post profile (4) is constructed symmetrically in such a way that abutment legs (6) of equal size project respectively on both sides of the central web (5) and that the two ribs (9) located on the rear side for receiving a dividing wall (10) are of equal size.

5. Built-in furniture according to Claim 1, characterised in that the post profile (4') for a side post (1') has an abutment leg (6) solely on one side, and that the rib (9') located on the other side is smaller than the rib (9) adjacent to the abutment leg (6).

6. Built-in furniture according to Claim 1, characterised in that the central web (5) projects beyond the front side of the adjacent doors (2) or fixed front wall sections (3).

## Revendications

1. Meuble à encastrer pour mobilhome comportant une paroi frontale, qui présente des section de paroi frontale fixes (3) et des portes (2), et des cloisons (10) ainsi que des parois latérales (12) qui s'étendent vers l'arrière à partir de la paroi frontale, caractérisé en ce que la paroi frontale présente plusieurs montants (1, 1') agencés à distance l'un de l'autre, entre lesquels sont agencées les portes (2) et les sections de paroi frontale fixes (3), chaque montant (1, 1') est constitué d'un profilé (4, 4') avec une âme centrale dégagée vers l'avant d'où fait saillie sur au moins un côté une aile d'arrêt (6) sur laquelle s'applique la porte voisine (2) ou la section de paroi frontale fixe (3), et sur l'arrière du profilé (4, 4') font saillie deux nervures parallèles (9, 9') entre lesquelles l'arète frontale d'une cloison (10) ou d'une paroi latérale (12) est reçue.

2. Meuble à encastrer selon la revendication 1, caractérisé en ce que l'aile d'arrêt (6) présente un bourrelet élastique (8) sur sa surface d'arrêt (7) tournée vers la porte (2) ou vers la section de paroi frontale fixe (3).

3. Meuble à encastrer selon la revendication 2, caractérisé en ce que le profilé (4, 4') est un profilé à caisson extrudé en matière plastique sur lequel le bourrelet élastique (8) constitué de matière plastique flexible est moulé.

4. Meuble à encastrer selon la revendication 1, caractérisé en ce que le profilé (4, 4') est conformé de manière symétrique de sorte que fassent saillie respectivement sur les deux côtés de l'âme centrale des ailes d'arrêt de mêmes dimensions et les deux nervures (9) agencées sur la partie arrière pour recevoir une cloison (10) sont de mêmes dimensions.

5. Meuble à encastrer selon la revendication 1, caractérisé en ce que le profilé (4, 4') d'un montant latéral (1') ne présente que sur un côté une aile d'arrêt (6) et la nervure (9') agencée sur l'autre côté est plus petite que la nervure (9) voisine de l'aile d'arrêt (6).

6. Meuble à encastrer selon la revendication 1, caractérisé en ce que l'âme centrale (5) dépasse de la partie frontale des portes voisines (2) ou des sections de paroi frontale fixes (3).
